# EUROPEAN PATENT SPECIFICATION

(11) **EP 3 202 523 B1**
(45) Date of publication and mention of the grant of the patent: **03.04.2019**
(21) Application number: 16154216.2
(22) Date of filing: 04.02.2016
(51) Int. Cl.: B23K 26/356, B23K 101/00, B23K 26/00, C21D 10/00

(54) **OVERLAY MATERIAL FOR LASER SHOCK PEENING**
ÜBERLAGERUNGSMATERIAL ZUM LASERSCHOCKHÄMMERN
MATÉRIAU DE RECOUVREMENT POUR MARTELAGE PAR CHOC LASER

(43) Date of publication of application: 09.08.2017
(73) Proprietor: Airbus Operations GmbH, 21129 Hamburg (DE); Coventry University, Coventry, West Midlands CV1 5FB (GB)
(72) Inventor: FURFARI, Domenico, 21129 Hamburg (DE); FITZPATRICK, Michael, Long Buckby, Northampton NN6 7QR (GB)
(74) Representative: LKGLOBAL Lorenz & Kopf PartG mbB Patentanwälte

(56) References cited:
- FR-A1- 2 709 762
- US-A- 5 744 781
- US-A- 6 057 003
- US-B2- 8 049 137

## Description

### Field of the invention

The invention generally relates to a customised overlay material for plasma confinement for the processing of aircraft components by laser shock peening.

In particular, the invention relates to a solid overlay for laser shock peening, a method for laser shock peening, and an aircraft component processed by laser shock peening.

### Background of the invention

Laser shock peening is based on the coupling of high energy pulsed laser beams into materials or components whereby the propagation of shock waves is caused and, hence, a near-surface residual compressive stress is generated and material hardening is achieved.

US 4,937,421 describes a laser peening apparatus and method for peening a workpiece utilizing a laser beam. The therein described system includes a foil aligned with a surface of the workpiece to be peened. The therein described foil absorbs energy from the beam thereby the foil is vaporized creating a hot plasma. The plasma creates a shock wave which passes through the foil and peens the workpiece surface.

US 5,744,781 A relates to a method and apparatus for laser shock peening a portion of a surface on a workpiece with a laser beam directed through a curtain of water confined to the surface by a confining device.

FR 2 709 762 A1 concerns a method of applying laser shocks to a crystalline solid material according to which the surface of the material is subjected to shots of a power laser, through a confinement medium transparent to the wavelength of the laser, wherein the surface of the material is coated with a liquid or elastomeric polymer forming the confinement medium.

US 6,057,003 A provides a method of laser shock processing including the steps of applying a transparent material such as water and reducing or limiting the thickness of the transparent overlay material. Although water is the preferred overlay material, other transparent overlay materials may be used, such as glass, quartz, silicates, polyethylene, or fluoroplastics may be used.

US8049137 discloses laser shock peening using an element for guiding the laser beam to a surface to be treated.

### Summary of the invention

It is an object of the present invention to provide an improved laser shock peening process.

This object is achieved by the subject-matter of the independent claims. Further exemplary embodiments are evident from the dependent claims and the following description.

According to a first aspect of the present invention, a solid overlay for laser shock peening according to claim 1 is provided.

According to a further, second aspect, the present invention relates to a method for laser shock peening according to claim 9.

According to a further, third aspect of the present invention, an aircraft component processed by a method according to the second aspect or according to any implementation of the second aspect is provided.

In other words, for the laser shock peening process, the surface to be treated is covered with a transparent, solid layer, wherein this layer lets the laser beam pass through and provides that the laser beam hits afterwards the surface of the component to be treated, for instance the component is further covered with a protective, ablative layer such as a paint or a tape. The laser beam vaporizes material of the component at the surface or material from the protective or ablative layer and consequently a plasma plume is formed. The transparent or translucent overlay provides that the generated plasma is confined thereby enhancing the deforming effect of the plasma on the surface of the component to be treated.

Without confining the generated plasma plume the high pressure plasma would reflect backwards into the air instead of travelling into the material and would create a high amplitude stress shock wave.

As the stress wave propagates into the material, since it is reflected by the overlay, deformation is caused and thereby residual stress is generated which hardens the material.

Using a solid, transparent or translucent overlay provides the advantage that the laser shock peening process can be used even if electrical systems are adjacent to the surface to be processed.

The present invention provides a transparent or a translucent overlay to confine the plasma, wherein the transparent or translucent overlay is to be shaped to follow the contour of the surface of the component to be treated.

The term "the solid overlay is structured and adapted to a shape of a surface of a component" as used by the present invention may be used to define that a certain shape or two-dimensional or three-dimensional contour of the surface of the component to be treated corresponds to the shape or in the two-dimensional contour or in the three-dimensional contour of the solid overlay. In other words, there may be a threshold distance for a minimal distance between the surface of the component to be treated and the contour of the solid overlay.

The threshold distance may for instance be up to 2 µm, up to 10 µm or up to 100 µm or up to 1000 µm or up to 10 mm or up to 100 mm or up to 20 cm. The thickness of the transparent or the translucent overlay may be for instance without limitation between 2 µm and 25 000 µm or between 5 µm and 7500 µm or between 10 µm and 500 µm.

According to an embodiment of the present invention, the solid overlay is configured to be producible by additive manufacturing. This advantageously allows synthesizing the solid overlay as a three-dimensional object based on three-dimensional printing, wherein successive layers of material are formed under computer control to create the solid overlay. Any kind of transparent or translucent polymer may be used for the three-dimensional printing process.

According to another embodiment of the present invention, the solid overlay is configured to be producible by cutting processes. This advantageously allows easily cutting the solid overlay out of a bulk layer structure.

According to the present invention, the solid overlayfurther comprises a surface texture, wherein the surface texture is configured to adapt a pressure pulse transmitted to the surface of the component upon laser shock peening. This advantageously allows further adapting and adjusting the intensity of the surface treatment process. The used laser systems may be high energy, Nd-glass lasers producing pulse energies, for instance without limitation, up to 20 J or up to 40 J or up to 60 J. Pulse duration may be for instance without limitation between 2 ns and 200 µs or between 10 ns and 20 µs or between 20 ns and 100 ns.

According to another exemplary embodiment of the present invention, the solid overlay is configured to confine a plasma plume generated by the laser light. This advantageously allows further controlling the laser shock peening process.

According to another embodiment of the present invention, the solid overlay is configured to prevent backward reflections of the plasma plume with respect to the surface of the component. This advantageously allows further improving the laser shock peening process.

According to another exemplary embodiment of the present invention, the solid overlay is configured to be coupled to the surface of the component. For instance, the solid overlay is a metallic layer and the solid overlay is coupled to the surface by an adjoining process.

According to another embodiment of the present invention, the solid overlay is configured to be coupled to the surface of the component by a protective layer or by an ablative layer. The protective layer or the ablative layer may be a tape, for instance an adhesive tape.

In general, the method describes a processing method for processing components used for aircraft. The method may also be used for processing components used for non-aircraft applications, for instance, components for marine vehicles, components for land vehicles, or for stationary machines or any further components.

### Brief description of the drawings

Fig. 1 schematically shows an aircraft structure near to electrical systems inside cockpit areas according to an exemplary embodiment of the present invention.
Fig. 2 schematically shows a perspective view of a component to be treated by laser shock peening according to an exemplary embodiment of the present invention.
Fig. 3 schematically shows a solid overlay for laser shock peening and a component to be treated by the laser shock peening according to an exemplary embodiment of the present invention.
Fig. 4 schematically shows a solid overlay for laser shock peening and a component to be treated by the laser shock peening according to an exemplary embodiment of the present invention.
Fig. 5 schematically shows a flow-chart diagram of a method for laser shock peening according to an exemplary embodiment of the present invention.

### Detailed description of the drawings

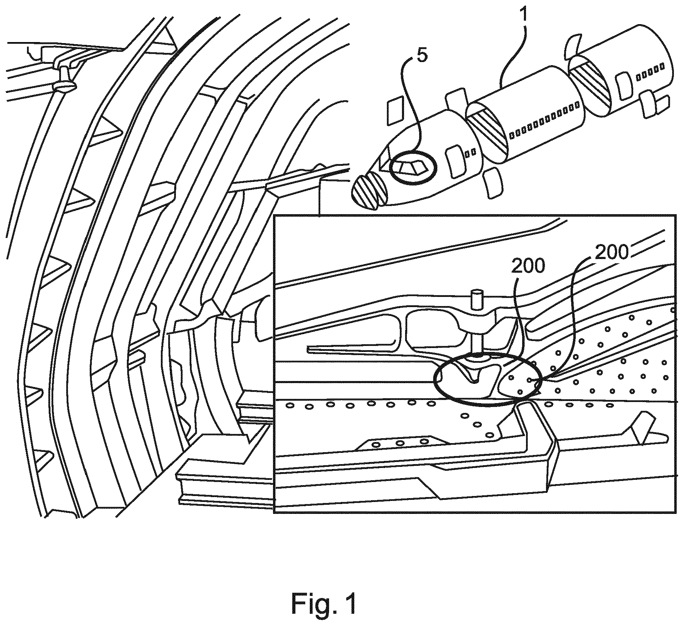

Fig. 1 shows an aircraft structure near to electrical systems inside cockpit areas according to an exemplary embodiment of the present invention.

Using a transparent or translucent overlay for the laser shock peening technique provides that the laser shock peening may be applied more effectively in aircraft manufacture.

Using a transparent or translucent overlay allows removing the water layer that is currently applied ubiquitously in laser peening manufacturing. The water layer is usually applied by a nozzle, with the water running down the workpiece under gravity.

With three-dimensonal, 3D, -printing or machining techniques, combined with detailed 3D-surface profilometry, a solid overlay material may be fabricated that would be a perfect match to any surface.

The overlay is formed with a textured surface in order to customise the pressure pulse profile into the material.

Fig. 1 shows the assembly of structural components of the aircraft fuselage 1 as the aircraft's main body section. The cockpit 5 may comprise components 200, which are located adjacent to electrical systems of the aircraft.

Using a solid, transparent or translucent overlay 100 provides the advantage that the laser shock peening process can be used even if electrical systems are adjacent to the surface to be processed.

The term "transparent" as used by the present invention may refer to a physical property of allowing light to pass through the material without being scattered or absorbed. In other words, at least a certain threshold value, for instance more than 95 % of the incoming light may be allowed to pass through the material without being absorbed or scattered by the material.

The term "translucent" as used by the present invention may refer to a physical property of allowing light to pass through the material without being absorbed. In other words, at least a certain threshold value, for instance more than 95 % of the incoming light may be allowed to pass through the material without being absorbed by the material.

In other words, a translucent medium allows the transport of light while a transparent medium not only allows the transport of light but allows for image formation.

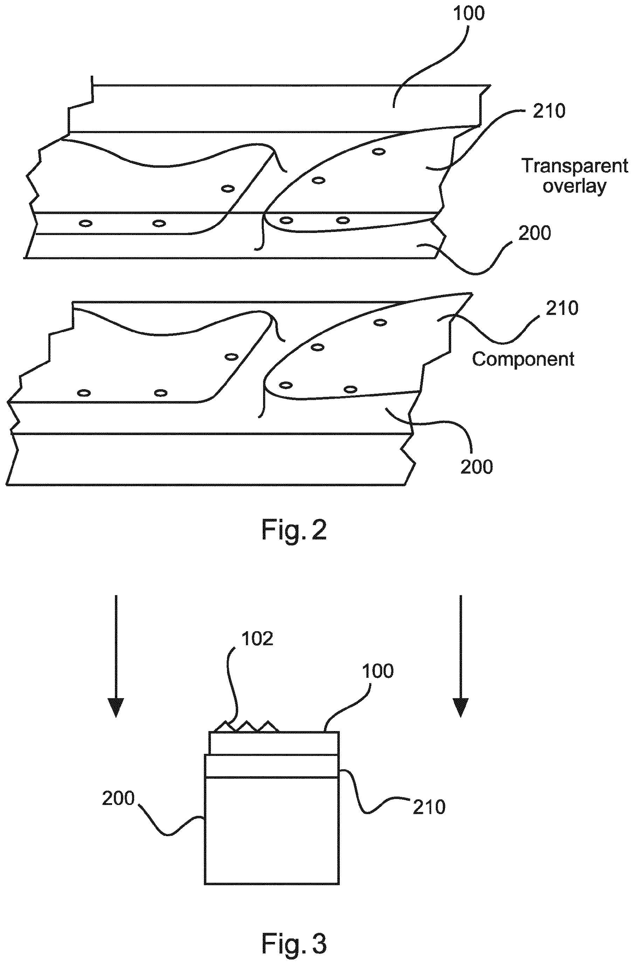

Fig. 2 schematically shows a perspective view of a component to be treated by laser shock peening according to an exemplary embodiment of the present invention.

A solid overlay 100 for laser shock peening may be deposited on top of a surface 210 of a component 200 to be treated by the laser shock peening. Without the solid overlay 100, the plasma plume 230 would not be confined and would not shift from the surface and, lowering the peak pressure.

The laser shock peening, LSP, method may be based on the coupling of high energy pulsed laser beams into materials or components 200, generating a propagation of shock waves and, hence, of near-surface residual compressive stresses and hardening of the surface 210 or of surface-near parts - up to several mm of structural depth depending on the energy applied - of the bulk material of the component 200.

The laser used for the laser shock peening may for instance be a pulsed Nd:YAG laser or a laser with 1054 nm wavelength and 2 - 20 ns laser pulse length.

Fig. 3 schematically shows a solid overlay for laser shock peening and a component to be treated by the laser shock peening according to an exemplary embodiment of the present invention.

A solid overlay 100 for laser shock peening may comprise a transparent or translucent material, wherein the solid overlay 100 is structured and adapted to a shape 220 of a surface 210 of a component 200 to be treated by the laser shock peening.

The solid overlay 100 may be configured to be producible by additive manufacturing, producible by liquid spraying, or by cutting processes.

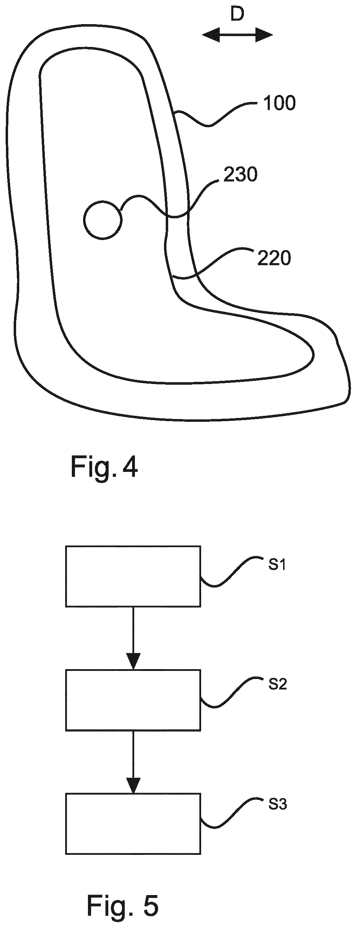

Fig. 4 schematically shows a solid overlay for laser shock peening and a component to be treated by the laser shock peening according to an exemplary embodiment of the present invention.

The component 200, or the shape 220 of the component, may be separated from the solid overlay 100 by a threshold distance D.

The threshold distance D may for instance be up to 2 µm, up to 10 µm or up to 100 µm or up to 1000 µm or up to 10 mm or up to 100 mm or up to 20 cm. The thickness of the transparent or the translucent overlay may be for instance without limitation between 2 µm and 25 000 µm or between 5 µm and 7500 µm or between 10 µm and 500 µm.

Fig. 5 schematically shows a flow-chart diagram of a method for laser shock peening according to an exemplary embodiment of the present invention.

The method may comprise the following steps of:
As a first step of the method, providing S1 a component 200 with a surface 210 to be treated by the laser shock peening may be performed.

As a second step of the method, providing S2 a solid overlay 100 on the surface 210 may be performed, wherein the solid overlay 100 comprises a transparent or translucent material, wherein the solid overlay 100 is structured and adapted to a shape 220 of the surface 210, and the solid overlay further comprises a surface texture (102), which is configured to adapt a pressure pulse transmitted to the surface (210) of the component (200) upon laser shock peening.

As a third step of the method, applying S3 laser light to the component 200 may be conducted, wherein the laser light is transmitted through the solid overlay 100 and absorbed at the surface 210, generating a plasma plume 230.

While the invention has been illustrated and described in detail in the drawings and the foregoing description, such illustration and description are to be considered illustrative and exemplary and not restrictive; the invention is not limited to the disclosed embodiments.

Other variations to the disclosed embodiments can be understood and effected by those skilled in the art and practicing the claimed invention, from a study of the drawings, the disclosure, and the appended clams. In the claims the term "comprising" does not exclude other elements, and the indefinite article "a" or "an" does not exclude a plurality.

The mere fact that certain measures are recited in mutually different claims does not indicate that a combination of these measures cannot be used to advantage. Any reference signs in the claims should not be construed as limiting the scope of protection.

## Claims

1. A solid overlay (100) for laser shock peening, the solid overlay (100) comprising:
a transparent or translucent material, wherein the solid overlay (100) is structured and adapted to a shape (220) of a surface (210) of a component (200) to be treated by the laser shock peening; and further comprising a surface texture (102) which is configured to adapt a pressure pulse transmitted to the surface (210) of the component (200) upon laser shock peening.

2. The solid overlay (100) according to claim 1,
wherein the solid overlay (100) is configured to be producible by additive manufacturing.

3. The solid overlay (100) according to anyone of the preceding claims,
wherein the solid overlay (100) is configured to be producible by cutting processes.

4. The solid overlay (100) according to anyone of the preceding claims,
wherein the solid overlay (100) is configured to confine a plasma plume (230) generated by laser light.

5. The solid overlay (100) according to claim 4,
wherein the solid overlay (100) is configured to prevent backward reflections of the plasma plume (230) with respect to the surface (210) of the component (200).

6. The solid overlay (100) according to anyone of the preceding claims,
wherein the solid overlay (100) is configured to be coupled to the surface (210) of the component (200).

7. The solid overlay (100) according to claim 6,
wherein the solid overlay (100) is configured to be coupled to the surface (210) of the component (200) by a protective layer or by a ablative layer.

8. Use of the solid overlay (100) according to anyone of the preceding claims for laser shock peening.

9. A method for laser shock peening, the method comprising the steps of
- Providing (S1) a component (200) with a surface (210) to be treated by the laser shock peening;
- Providing (S2) a solid overlay (100) on the surface (210), wherein the solid overlay (100) comprises a transparent or translucent material, wherein the solid overlay (100) is structured and adapted to a shape (220) of the surface (210); and the solid overlay further comprising a surface texture (102), which is configured to adapt a pressure pulse transmitted to the surface (210) of the component (200) upon laser shock peening.
- Applying (S3) laser light to the component (200), wherein the laser light is transmitted through the solid overlay (100) and absorbed at the surface (210), generating a plasma plume.

10. The method according to claim 9,
wherein the solid overlay (100) is produced by additive manufacturing.

11. The method according to anyone of the preceding claims 9 to 10,
wherein the solid overlay (100) is produced by cutting processes.

12. The method according to anyone of the preceding claims 9 to 11,
wherein a surface texture (102) of the solid overlay (100) adapts a pressure pulse transmitted to the surface (210) of the component (200) upon laser shock peening.

13. Aircraft component with a solid overlay according to any one of claims 1 to 7.

## Patentansprüche

1. Feste Auflage (100) für Laserschockstrahlen, wobei die feste Auflage (100) Folgendes umfasst:
ein transparentes oder durchscheinendes Material, wobei die feste Auflage (100) strukturiert und an eine Form (220) einer Oberfläche (210) einer durch das Laserschockstrahlen zu behandelnden Komponente (200) angepasst ist; und weiterhin umfassend eine Oberflächentextur (102), die ausgebildet ist zum Anpassen eines beim Laserschockstrahlen zu der Oberfläche der Komponente (200) übertragenen Druckimpulses.

2. Feste Auflage (100) nach Anspruch 1,
wobei die feste Auflage (100) ausgebildet ist zum Erzeugtwerden durch additive Herstellung.

3. Feste Auflage (100) nach einem der vorhergehenden Ansprüche, wobei die feste Auflage (100) ausgebildet ist zum Erzeugtwerden durch Schneidprozesse.

4. Feste Auflage (100) nach einem der vorhergehenden Ansprüche,
wobei die feste Auflage (100) ausgebildet ist zum Begrenzen einer durch Laserlicht erzeugten Plasmafahne (230).

5. Feste Auflage (100) nach Anspruch 4,
wobei die feste Auflage (100) ausgebildet ist zum Verhindern von Rückwärtsreflexionen der Plasmafahne (230) bezüglich der Oberfläche (210) der Komponente (200).

6. Feste Auflage (100) nach einem der vorhergehenden Ansprüche,
wobei die feste Auflage (100) ausgebildet ist zum Gekoppeltwerden an die Oberfläche (210) der Komponente (200).

7. Feste Auflage (100) nach Anspruch 6,
wobei die feste Auflage (100) ausgebildet ist zum Gekoppeltwerden an die Oberfläche (210) der Komponente (200) durch eine Schutzschicht oder durch eine ablative Schicht.

8. Verwendung der festen Auflage (100) nach einem der vorhergehenden Ansprüche für Laserschockstrahlen.

9. Verfahren zum Laserschockstrahlen, wobei das Verfahren die folgenden Schritte umfasst:
- Bereitstellen (S1) einer Komponente (200) mit einer durch das Laserschockstrahlen zu behandelnden Oberfläche (210);
- Bereitstellen (S2) einer festen Auflage (100) auf der Oberfläche (210), wobei die feste Auflage (100) ein transparentes oder durchscheinendes Material umfasst, wobei die feste Auflage (100) strukturiert und an eine Form (220) der Oberfläche (210) angepasst ist; und die feste Auflage weiterhin eine Oberflächentextur (102) umfasst, die ausgebildet ist zum Anpassen eines beim Laserschockstrahlen zu der Oberfläche (210) der Komponente (200) übertragenen Druckimpulses.
- Anwenden (S3) von Laserlicht auf die Komponente (200), wobei das Laserlicht durch die feste Auflage (100) übertragen und an der Oberfläche (210) absorbiert wird, eine Plasmafahne erzeugend.

10. Verfahren nach Anspruch 9,
wobei die feste Auflage (100) durch additives Herstellen hergestellt wird.

11. Verfahren nach einem der vorhergehenden Ansprüche 9 bis 10,
wobei die feste Auflage (100) durch Schneidprozesse hergestellt wird.

12. Verfahren nach einem der vorhergehenden Ansprüche 9 bis 11,
wobei eine Oberflächentextur (102) der festen Auflage (100) einen beim Laserschockstrahlen zu der Oberfläche (210) der Komponente (200) übertragenen Druckimpuls anpasst.

13. Flugzeugkomponente mit einer festen Auflage nach einem der Ansprüche 1 bis 7.

## Revendications

1. Recouvrement solide (100) pour martelage par choc laser, le recouvrement solide (100) comprenant :
un matériau transparent ou translucide, dans lequel le recouvrement solide (100) est structuré et adapté à une forme (220) d'une surface (210) d'un élément (200) devant être traité par le martelage par choc laser ; et comportant en outre une texture superficielle (102), qui est conçue pour adapter une impulsion de pression transmise à la surface (210) de l'élément (200) lors du martelage par choc laser.

2. Recouvrement solide (100) selon la revendication 1,
le recouvrement solide (100) étant conçu pour pouvoir être produit par fabrication additive.

3. Recouvrement solide (100) selon l'une quelconque des revendications précédentes,
le recouvrement solide (100) étant conçu pour pouvoir être produit par des procédés de découpe.

4. Recouvrement solide (100) selon l'une quelconque des revendications précédentes,
le recouvrement solide (100) étant conçu pour confiner un panache de plasma (230) généré par une lumière laser.

5. Recouvrement solide (100) selon la revendication 4,
le recouvrement solide (100) étant conçu pour prévenir des réflexions vers l'arrière du panache de plasma (230) par rapport à la surface (210) de l'élément (200).

6. Recouvrement solide (100) selon l'une quelconque des revendications précédentes,
le recouvrement solide (100) étant conçu pour être accouplé à la surface (210) de l'élément (200).

7. Recouvrement solide (100) selon la revendication 6,
le recouvrement solide (100) étant conçu pour être accouplé à la surface (210) de l'élément (200) par une couche protectrice ou par une couche ablative.

8. Utilisation du recouvrement solide (100) selon l'une quelconque des revendications précédentes pour un martelage par choc laser.

9. Procédé pour martelage par choc laser, le procédé comportant les étapes consistant à
- fournir (S1) un élément (200) doté d'une surface (210) devant être traitée par le martelage par choc laser ;
- fournir (S2) un recouvrement solide (100) sur la surface (210), le recouvrement solide (100) comprenant un matériau transparent ou translucide, le recouvrement solide (100) étant structuré et adapté à une forme (220) de la surface (210) ; et le recouvrement solide comprenant en outre une texture superficielle (102), qui est conçue pour adapter une impulsion de pression transmise à la surface (210) de l'élément (200) lors du martelage par choc laser.
- appliquer (S3) une lumière laser à l'élément (200), la lumière laser étant transmise à travers le recouvrement solide (100) et absorbée au niveau de la surface (210), en générant un panache de plasma.

10. Procédé selon la revendication 9,
dans lequel le recouvrement solide (100) est produit par fabrication additive.

11. Procédé selon l'une quelconque des revendications 9 à 10 précédentes,
dans lequel le recouvrement solide (100) est produit par des procédés de découpe.

12. Procédé selon l'une quelconque des revendications 9 à 11 précédentes,
dans lequel une texture superficielle (102) du recouvrement solide (100) adapte une impulsion de pression transmise à la surface (210) de l'élément (200) lors du martelage par choc laser.

13. Élément d'aéronef doté d'un recouvrement solide selon l'une quelconque des revendications 1 à 7.
